# EUROPEAN PATENT APPLICATION

(11) **EP 4 365 927 A1**
(43) Date of publication of application: **08.05.2024**
(21) Application number: 23206393.3
(22) Date of filing: 27.10.2023
(51) Int. Cl.: H01J 49/00, H01J 49/06

(54) **ENHANCING MASS SPECTROMETER SIGNALS**

(30) Priority: 04.11.2022 GB 202216432
(71) Applicant: Thermo Fisher Scientific (Bremen) GmbH, 28199 Bremen (DE)
(72) Inventor: THALMANN, Jona, 28199 Bremen (DE); SCHLÜTER, Hans-Jürgen, 28199 Bremen (DE); STRASSER, Benno, 28199 Bremen (DE); QUAAS, Norbert, 28199 Bremen (DE)
(74) Representative: Boult Wade Tennant LLP

(57) **Abstract**

Method for operating a mass spectrometer having a skimmer and a circuit configured to apply an electric potential to the skimmer comprising obtaining an initial mass spectrum of a sample. Measuring a value of the obtained initial mass spectrum, the value indicating an ion beam intensity of one or more ion species. Applying a varying DC electric potential to the skimmer to identify an operational electric potential, wherein the DC electric potential is varied until the value indicating the ion beam intensity of the one or more ion species changes by a predetermined amount. Providing an output comprising the mass spectrum with the operational electric potential applied to the skimmer.

A further method for operating a mass spectrometer comprising obtaining an initial mass spectrum of a sample. Measuring a value of the obtained initial mass spectrum, the value indicating an ion beam intensity of one or more ion species. Varying a pressure within the mass spectrometer to identify an operational pressure, wherein the pressure is varied until the value indicating the ion beam intensity of the one or more ion species changes by a predetermined amount. Providing an output comprising the mass spectrum with the pressure within the mass spectrometer at the operational pressure.

## Description

### Field of the Invention

The present invention relates to a mass spectrometer and a method for operating the mass spectrometer, and especially an inductively coupled plasma mass spectrometry (ICP-MS).

### Background of the Invention

Data produced by mass spectrometers for particular analytes may be affected by the presence of other constituents than the analytes in a sample. This may be described as a matrix effect or matrix interference. In general, this can suppress ion intensity signals within a mass spectrum, which can lead to a reduction in sensitivity, incorrect quantitative results and other errors.

One type of matrix effect is a physical suppression of the analyte signal brought on by the level of total dissolved solids (TDS) or acid concentration in the sample. Another type of matrix effect is caused when the matrix component affects ionisation conditions in a plasma discharge, resulting in varying amounts of signal suppression depending on the concentration of the matrix components. A further mechanism leading to signal suppression is known as space charge effect, a matrix induced effect that produces a reduction of the analyte signal. This is a type of matrix induced interference that produces a suppression of the analyte signal. This space charge effect can cause a defocusing of the ion beam. Therefore, highly abundant matrix elements will dominate the ion beam, pushing the analyte ions out of their way, typically leading to lower sensitivity.

Furthermore, matrix components may be deposited around a skimmer or a sampler orifice by running the instrument for extended periods of time. This can lead to long-term instabilities in the measured ion intensity values. Correction of matrix interference may use an internal standard, which ideally has a similar analyte mass and sample composition, but this is limited to investigations of similar analytes. However, there is still a need to improve results with regards to matrix effects especially for long-term experiments, where drift effects occur due to deposits on the sampling area and elsewhere.

Some configurations of mass spectrometers result in higher sensitivity, but these can be more susceptible to matrix effects. Switching between a configuration that is more robust with regards to the matrix effect and a configuration with improved sensitivity can require changes to hardware, which can be slow, cause other difficulties, and require skilled personnel.

Therefore, there is required a method and system that overcome these problems.

### Summary of the Invention

A mass spectrometer, for example but not limited to a liquid chromatography-mass spectrometer (LC-MS) or an inductively coupled plasma-mass spectrometer (ICP-MS), can be configured, calibrated or otherwise optimised for use with a particular sample or sample type. For example, a sample may contain an analyte but may also contain a matrix (e.g., a contaminant or other constituent components that may interfere with an ion beam intensity signal of the analyte). The mass spectrometer also has a skimmer, which can be used to skim away boundary regions of a plasma plume and to form the ion beam as it enters the mass analyser of the mass spectrometer.

A matrix can contribute a much higher proportion of the overall ion flow than that of the analyte and so may be represented by much higher signal intensities within the mass spectrum than that of the analyte. A matrix effect can include a reduction of the amount of analyte ions that are detected by the mass spectrometer. Another matrix effect is due to space charge that shields the voltage of e.g., an extraction lens. This can affect the focussing of the ion optics. In any case, the presence of a matrix can change an expected value indicating an ion beam intensity of at least one analyte, being a result of a particular matrix concentration. This can lead to inaccurate results indicating incorrect analyte concentrations in samples.

However, applying an electric potential (preferably a negative DC electric potential) to the skimmer can reduce the matrix dependency and decrease the matrix suppression effect even though this can (but will not always) reduce the overall signal intensity from both the analyte and the matrix.

An additional benefit of applying a potential to the skimmer is to keep this component clean by deflecting away contaminants (for this purpose preferably a positive DC electrical potential). This is particularly advantageous as the skimmer opening can be susceptible to clogging due to its small size.

The system and method consist of finding an improved or optimised voltage to apply to the skimmer by setting a voltage (usually a negative voltage, although a positive voltage may also be used in some cases) so that the mass spectrometer signal of one or more ion species is changed (increased or reduced) by a particular amount or proportion (e.g., ¾).

This may be described as a tuning method for setting up or operating the mass spectrometer for particular samples or sample types. This technique improves the immediate signal recovery of the device for particular samples. The tuning method may be automated and executed using computer control (in communication with the mass spectrometer) or use a dedicated control unit having firmware configured to execute the method, for example.

To improve long-term stability (e.g., when the device is used over several hours), a higher or increased pressure may be applied within the mass spectrometer instead of, or at the same time that the voltage (e.g., negative voltage) is applied to the skimmer. Both techniques can change, thereby in two ways also reduce, the overall signal intensity. Applying a voltage to the skimmer (e.g., a negative DC voltage) improves instantaneous matrix recovery and increasing the pressure within the beam path (e.g., at the skimmer or extraction region) improves long-term stability. Both techniques therefore complement each other.

In summary, this ensures an optimal matrix stability/tolerance by using an increased pressure at the skimmer and/or apply a voltage to the skimmer of a mass spectrometer and/or apply an increased pressure.

Against this background and in accordance with a first aspect there is provided a method for operating a mass spectrometer having a skimmer and a circuit configured to apply an electric potential to the skimmer, the method comprising the steps of:
obtaining an initial mass spectrum of a sample;
measuring a value of the obtained initial mass spectrum, the value indicating an ion beam intensity, for example of one or more ion masses or species;
applying a varying DC electric potential to the skimmer to identify an operational electric potential, wherein the DC electric potential is varied until the value indicating the ion beam intensity of the one or more ion species changes by a predetermined amount; and
providing an output comprising the mass spectrum with the operational electric potential applied to the skimmer.

Therefore, matrix effects may be reduced, partially eliminated, or fully eliminated. Hence, more consistent or more accurate quantitative measurements may be obtained. When the intensity of the one or more ion species changes by a predetermined amount then the electric potential applied to the skimmer may be recorded (e.g., against the particular sample and other operating conditions) and cease varying. This electric potential becomes the operational or operating electric potential for one or more mass spectra that may be obtained from the mass spectrometer. The mass spectra may be stored together with data indicating the operational electric potential. The process may take place once for a particular set of measurements or before every mass spectrum that is obtained.

There may be different ways to determine that the value indicating the ion beam intensity has varied by the predetermined amount. For example, an amplitude for a particular ion in the mass spectrum may be reduced by a particular percentage, absolute value, or ratio (original to new value). Other conditions may be reached directly or indirectly, indicating that the value has varied or changed by the predetermined amount. The electric potential may be set relative to other parts or components of the mass spectrometer. These other components may typically be grounded or earthed, for example. When the output is provided in the final method step of providing a mass spectrum with the operational electric potential applied to the skimmer, a further output may include the initial mass spectrum, so that both mass spectra can be compared, i.e., with and without the electric potential applied to the skimmer.

Preferably, the step of obtaining the initial mass spectrum of the sample is carried out with no electric potential (floating skimmer) or a ground potential (i.e., 0 V) applied to the skimmer. There may also be a constant non-zero voltage applied to the skimmer for the initial mass spectrum but usually the skimmer will initially be grounded.

Optionally, the method may further comprise the step of increasing or decreasing a pressure at an interface between a sampling aperture (of the mass spectrometer) and the skimmer to vary (increase or decrease) the value indicating the ion beam intensity at the one or more ion species so that the combination of the increased or decreased pressure and electric potential provide the value indicating the ion beam intensity of the one or more ion species at the predetermined amount. Once the value has changed by the predetermined amount then the pressure may be recorded and set as an operational or operating pressure and used together with the operational electric potential for one or more mass spectra. The mass spectra may be recorded together with a value of the operational pressure and/or operational electric potential. For example, the pressure may be increased or varied within the expansion region (interface region) located between the sampler and the skimmer. Generally, increasing the pressure (from an expansion vacuum of around 2.9 mbar (Ar) or below) will reduce the signal from the mass spectrometer.

The pressure values given here should only be taken as exemplary values. Moreover, these values are usually measured using a Pirani (heat conduction) pressure meter calibrated to nitrogen. In order to convert it to the physical pressure (as expressed in force divided by area) this has to be corrected for the gas type. Because we are dealing with gas mixtures, this is not straightforward. Therefore the Pirani output value is used in the described system and method, but the physical pressure value may deviate slightly from this.

The voltage applied to the skimmer may increase or decrease the ion intensity signal. With both effects taking place then the overall result is to change (e.g., reduce) the signal by the predetermined amount (e.g., ¾ or ½) of the original signal when compared to the value obtained without a voltage applied to the skimmer and with normal operating pressure. The pressure may be measured, configured, and regulated by a pressure regulator or a control unit. The pressure may be measured in the expansion region, but also downstream of the skimmer in the extraction region. The pressure changes may also be managed automatically using computer control or a dedicated control unit having suitable firmware, for example. The interface between the sampler (or entrance to the mass spectrometer) and the skimmer may be a region just in front of a cone of the skimmer. The interface pressure may be varied using a pump and measured using a pressure sensor. The interface pressure may be varied by changing a rotary pump speed, varying conductance (e.g., using a regulation valve or otherwise changing the gas flow rate), switching between different conductances, and/or by switching on and off further pumping systems, for example.

Optionally, the value indicating the ion beam intensity may be any one or more of: an amplitude of one or more peaks in the mass spectrum, and a measurement of a total current (e.g., a total ion current). The ion current may be measured using an ion optic lens, for example. Other values or properties of the mass spectrum or signal may be used as well.

Preferably, the predetermined amount may be a percentage or a fractional reduction in the value. The predetermined level may be selected from one of a set of predetermined amounts or levels specific to different experimental conditions, samples, sample types, or matrix types, for example.

Optionally, the predetermined amount may be a percentage or fractional change in the value.

Optionally, the predetermined amount may be a reduction in the value.

Optionally, the reduction (in the predetermined amount) may be a reduction of between about a factor of 3 (1/3) and ten times (1/10). However, a lower reduction of the value may be used (e.g., reduced by about a half or 3/4).

Optionally, the method may further comprise repeating the steps (i.e., the obtaining, measuring, applying, and providing steps and any or all of the optional steps) using different samples having known compositions and recording the required electric potential to change the value indicating an ion beam intensity for each known composition by the predetermined amount. The electric potential applied to the skimmer that changes or reduces the value or signal by the predetermined amount may be recorded for each of the known compositions. This may take the form of a calibration process for a set of known compositions and may also be part of the automated and computer-controlled process. These values may be stored and retrieved when a sample having an expected composition at or close to the known calibration compositions is investigated. Therefore, the retrieved electric potential may be applied immediately (without requiring the other steps) for such samples.

Preferably, the electric potential may be a negative electric potential (e.g., relative to a sampling cone or other component of the spectrometer that may be grounded or earthed). Whilst negative electric voltages may be appropriate for most samples in some cases, a positive voltage may also be used. The method may scan through a range of voltages (e.g., +10 V to -10 V, +5 V to -5 V, +4 V to -4 V, +3 V to -3 V, or any other range). Any or all of the ranges may have as an upper limit 10 V, 9 V, 8 V, 7 V, 6 V, 5 V, 4 V, 3 V, 2 V, 1 V, 0 V. Any or all of the ranges may have as a lower limit -10 V, -9 V, -8 V, -7 V, -6 V, -5 V, -4 V, -3 V, -2 V, -1 V, 0 V. Ranges may be set based on sample or matrix type and ion mass of the analytes of interest.

Preferably, the method may further comprise providing a further output comprising a mass spectrum with the operational electric potential applied to the skimmer. One or more additional data sets (mass spectra) may be collected with the electric potential of the skimmer set at the operational electric potential. These may be the data used for further analysis.

Optionally, the electric potential may be between -1 V and -4 V. Other values or ranges may be used (e.g., 0 V to -5 V).

Optionally, the method may further comprise the steps of:
storing the electric potential required to change the value indicating the ion beam intensity of the one or more ion species to the predetermined amount for different sample types and compositions. Therefore, a database or data store of values may be developed.

Optionally, the method may further comprise the step of applying an AC current to the skimmer at the same time as applying the DC electric potential. The AC current may be varied or may be fixed. A suitable frequency may be 50 - 60 Hz, for example. Together, the DC electric potential and the AC current applied to the skimmer may change the value by the predetermined amount. The AC RMS range (fixed or variable) may be +/-1, 2, 3, 4, 5, up to 10 V, for example.

Optionally, the method may further comprise the steps of:
removing the applied electric potential; and
providing a further output comprising a mass spectrum without the electric potential applied to the skimmer (e.g., with the skimmer grounded or set to 0 V). Obtaining data with and without the electric potential applied to the skimmer may yield further information about the sample. Therefore, this may form a further investigative technique where additional information about the sample may be gathered by comparing the mass spectra with and without the electric potential applied to the skimmer. This process may also be used to check that the operational electric potential is correct and does not need to be reassessed or reset.

According to a second aspect, there is provided a method for operating a mass spectrometer, the method comprising the steps of:
obtaining an initial mass spectrum of a sample;
measuring a value of the obtained initial mass spectrum, the value indicating an ion beam intensity of one or more ion species;
varying a pressure within the mass spectrometer to identify an operational pressure, wherein the pressure is varied until the value indicating the ion beam intensity of the one or more ion species changes by a predetermined amount; and
providing an output comprising the mass spectrum with the pressure within the mass spectrometer at the operational pressure.

Optionally, the method may further comprise the step of applying a varying DC electric potential to a skimmer of the mass spectrometer to identify an operational electric potential, wherein the DC electric potential is varied so that the combination of applying the operational pressure and the electric potential to the skimmer change the value indicating the ion beam intensity of the at least one or more ion species by the predetermined amount. An AC current (as described above) may also be applied to the skimmer.

Preferably, the operational electric potential may be a negative electric potential. A positive electric potential may also be used. Preferably, the skimmer may be electrically insulated from other components and supports and an entrance to the system may be grounded or earthed.

Preferably, the predetermined amount may be a reduction in the value indicating the ion beam intensity of the one or more ion species.

Preferably, the pressure may be increased.

Preferably, the pressure may be the pressure at an interface between the sampler of the mass spectrometer and the skimmer. This is the pressure just upstream of a cone or tip of the skimmer. This interface region may be maintained or have its pressure varied using a pump and a pressure sensor.

According to a third aspect, there is provided a mass spectrometer having a skimmer and means adapted to execute the steps of the described methods.

Preferably, the mass spectrometer may be an inductively coupled plasma mass spectrometer, ICP-MS. Other mass spectrometers may be used. The technique may also be used with liquid chromatography mass spectrometers (LC-MS) and/or laser ablation.

Optionally, the mass spectrometer may further comprise a bipolar (or a four quadrant) power supply configured to apply the electric potential to the skimmer. The four-quadrant power supply may operate as both an electron source or sink (e.g., while the potential is kept fixed), for example.

Optionally, the skimmer may be formed from platinum, aluminium, titanium, or nickel (or any combination of these). Other materials may be used (e.g., conductive or semiconductive). Preferably, the skimmer may comprise a cone.

Optionally, the mass spectrometer may further comprise a device or setup configured to maintain the skimmer at a temperature between 450 °C and 650 °C (or more generally, 200 °C and 750 °C). Other temperatures and temperature ranges may be used (e.g., up to 1000 °C). This may include passive heating (i.e., by the plasma) but regulated by a suitable thermal coupling (e.g., active or passive). There may be a temperature gradient across the skimmer so the temperature at the tip (of the cone) may be between 450 °C and 750 °C, for example.

In accordance with a further aspect, there is provided a method for operating a mass spectrometer having a skimmer and a circuit configured to apply an electric potential to the skimmer, and providing an output comprising the mass spectrum with the operational electric potential applied to the skimmer.

The method to determine the operational electric potential at the skimmer may comprise the steps of:
obtaining an initial mass spectrum of a sample;
measuring a value of the obtained initial mass spectrum, the value indicating an ion beam intensity of one or more ion masses or species;
applying a varying DC electric potential to the skimmer to identify an operational electric potential, wherein the DC electric potential is varied until the value indicating the ion beam intensity of the one or more ion-masses fulfils a predetermined condition.

In accordance with a further aspect, there is provided a method for operating a mass spectrometer, the method comprising the steps of:
obtaining an initial mass spectrum of a sample;
measuring a value of the obtained initial mass spectrum, the value indicating an ion beam intensity of one or more ion masses or species;
varying a pressure within the mass spectrometer to identify an operational pressure, wherein the pressure is varied until the value indicating the ion beam intensity of the one or more ion-masses fulfils a predetermined condition; and
providing an output comprising the mass spectrum with the pressure within the mass spectrometer at the operational pressure

The methods described above may be implemented as a computer program comprising program instructions to operate a computer. The computer program may be stored on a computer-readable medium. The computer may form a part of the mass spectrometer or may be a separate apparatus.

The computer system may include a processor or processors (e.g., local, virtual or cloud-based) such as a Central Processing Unit (CPU), and/or a single or a collection of Graphics Processing Units (GPUs). The processor may execute logic in the form of a software program. The computer system may include a memory including volatile and nonvolatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a mass spectrometer system. A skimmer potential Vsk, an interface pressure Psk, an interior pressure Pint and a skimmer tip temperature Tsk are indicated in this figure;
FIG. 2 shows a flowchart of a method for operating the system of figure 1, given by way of example only.
FIG. 3 shows a flowchart of a further method for operating the system of figure 1, given by way of example only;
FIG. 4 shows a flowchart of a further method for operating the system of figure 1, given by way of example only;
FIG. 5 shows graphical results illustrating changes in ion intensities of mass spectra obtained from the system of figure 1, when different voltages are applied to the skimmer;
FIG. 6 shows a graph illustrating the operational modes of an example four-quadrant power supply;
FIG. 7 shows graphical results illustrating changes in ion intensities of mass spectra obtained from the system of figure 1, when different DC and AC voltages are applied to the skimmer using a four-quadrant power supply operating according to figure 6;
FIG. 8 shows further graphical results illustrating changes in analyte ion intensities of mass spectra obtained from the system of figure 1 using samples of different matrix concentrations, when different DC voltages are applied to the skimmer;
FIG. 9 shows a graphical representation of ion signals obtained from the system of figure 1 with different interface pressures for a selection of ion masses;
FIG. 10 shows a graphical representation of ion signals obtained from the system of figure 1 with different skimmer voltages and particular interface pressures for a selection of ion masses; and
FIG. 11 shows a graphical representation of recovery percentages obtained with different instrument settings, in particular with different skimmer voltages and particular interface pressures for a selection of ion masses.

It should be noted that the figures are illustrated for simplicity and are not necessarily drawn to scale. Like features are provided with the same reference numerals.

### Detailed description of the preferred embodiments

The described system improves the matrix tolerance of mass spectrometers and inductively coupled plasma mass spectrometer (ICP-MS), in particular.

In ICP-MS, a sample is introduced into a plasma where the sample is vaporised and ionised. The sample ions are sampled from the plasma by an interface and introduced into a mass spectrometer. The plasma sampling interface typically includes a sampler and a skimmer. These elements may be grounded. However, improvements are exhibited when a voltage, either positive or negative (depending on sample, analyte and/or matrix) is applied to the skimmer, which is also electrically isolated from ground.

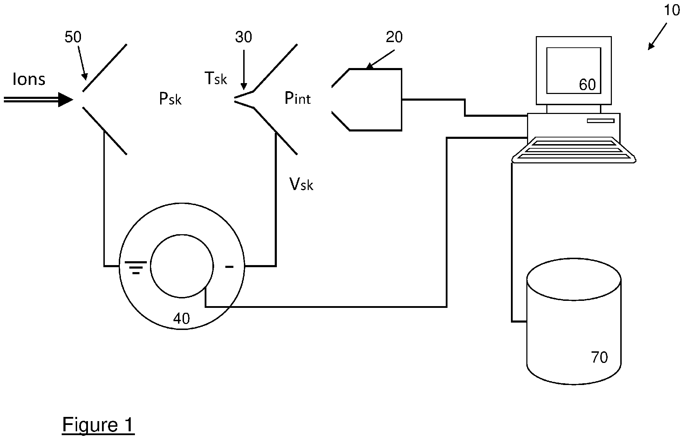

Preferably, ions are produced in an ICP torch (but other techniques may be used), introduced into vacuum via the interface and guided through ion optics into a mass separation device. The plasma sampling interface typically includes a sampler and an insulated skimmer. Figure 1 shows a schematic diagram of a simplified system 10. The sampler 50 separates atmospheric pressure (around 1000 mbar) from a lower pressure region (interface pressure, 2.5 to 4.0 mbar (Ar)) in front of the skimmer 30. The mass analyser 20 operates at high vacuum with the vacuum level being dependent on the specific measurement mode, e.g., whether collision gas is used or not.

An electric potential is controlled by a control unit 40 (e.g., a four-quadrant power supply), which may be regulated using digital ports and operated by suitable software (e.g., Qtegra^{™} software). The control unit 40 may also be controlled by a computer 60. A manual power supply may also be used. A slider or other user interface may be used to select a particular voltage, or this may be computer controlled by suitable software. A selectable voltage range (e.g., -10 V to +10 V) may be provided in an instrument control window of the control unit 40 or control software. The voltages may be selected in order to regulate a particular required analyte recovery rate.

The electric potential applied to the skimmer 30 depending on particular operating requirements, which may be user selected. For example, the voltage settings of the control unit 40 may be configured to provide high sensitivity or optimal matrix robustness for each analyte mass (i.e., dynamic lens tuning). A description of the tuning methods used to select a particular electric potential to apply to the skimmer is described below.

In figure 1 the ion beam moves from left to right. However, the mass spectrometer components and ion beam may be oriented differently. After the ICP-torch (not shown in this figure) there is a sampler 50, which is grounded, introducing the ions into the intermediate vacuum. A cone section of the skimmer 30 is connected to the voltage supply of the control unit 40 to control the electrical potential. The skimmer 30 introduces the ions from an intermediate (interface) region (e.g., 2.5 mbar (Ar) or below) having a pressure Psk to a high vacuum region having a pressure Pint in which a mass analyser 20 is located. The mass analyser 20 has a data and control connection to an operating processor or computer 60. The computer 60 may be a device separate to the mass analyser 20 or they may form an integral unit. The computer is connected to a data store or database 70, which is used to store mass spectra, operating parameters or other parameters used in the method of operating the mass spectrometer. The computer 60 may also automate the operation of the mass spectrometer.

Therefore, the skimmer 30 is insulated (e.g., using Kapton (RTM) or polyimide foil), electrically separating the surface of the skimmer from any support or cooling plate (not shown in this figure).

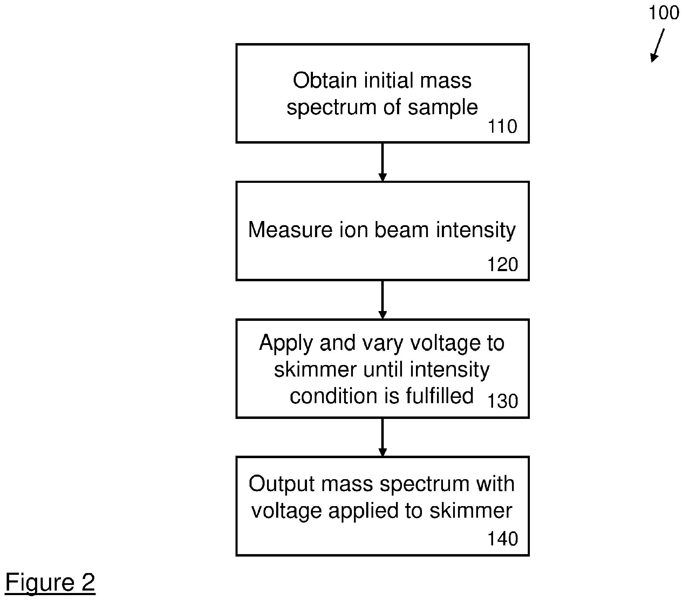

Figure 2 shows a flowchart of an example method 100 used to determine the potential difference or voltage to be applied to the skimmer 30. At step 110 an initial mass spectrum of the sample is obtained with the skimmer 30 grounded (e.g., achieved by the control unit 40). The mass spectrum will include one or more ion mass peaks having an amplitude that indicates an ion beam intensity. The ion beam intensity or amplitude of these one or more peaks is measured at step 120 (e.g., by computer 60).

At step 130 and with the mass spectrometer operating and the ion beam generating a signal from the mass analyser 20, the voltage or electric potential applied to the skimmer 30 is varied using the control unit 40. This may be controlled by the computer 60 or otherwise. The ion beam intensity will vary (usually reduce at least for smaller ion masses) with a changing applied voltage to the skimmer 30. This will be apparent from the signal from the mass analyser 20. The system 10 has data stored that will define a predefined level of change or reduction of the ion beam intensity. The applied voltage is varied until this predefined change or amount of reduction is achieved or other intensity condition is met. This may be an absolute, a relative, or a proportional variation. This determines the operating or operational voltage applied to the skimmer 30 (i.e., when the required change in value has been achieved). A mass spectrum is generated with the operational voltage applied to the skimmer 30 and this is output (e.g., from the computer 60 and/or stored with the database 70) at step 140.

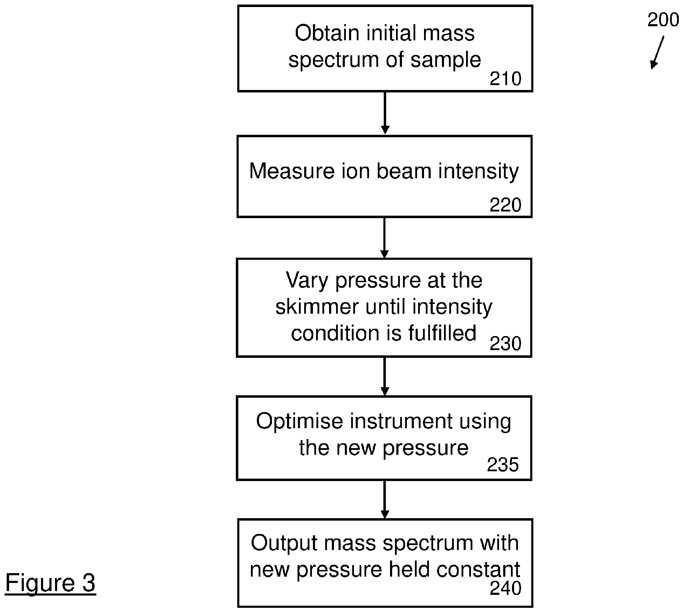

Whilst the application of an electric potential (Vsk) to the skimmer 30 can reduce or compensate for matrix effects, a further technique may be used instead of or in addition to the application of the electric potential. Instead of applying the electric potential to change or reduce the signal at an ion mass from the mass analyser 20, the pressure Pint within the mass spectrometer (e.g., between the skimmer 30 and the mass analyser 20) may be varied. Typically, increasing this pressure will reduce the ion beam intensity. Figure 3 shows a flowchart of a method 200 describing such a technique (pressure variance only).

Similar to the method 100 described with reference to figure 2, an initial mass spectrum is obtained at step 210. This is obtained with the pressure within the mass spectrometer (e.g., an interface between a sampling aperture (of the mass spectrometer) and the skimmer) at a default or normal pressure level (i.e., an interface vacuum of 2.5mbar (Ar) or below).

Again, the ion beam intensity is measured at step 220, with the lowest or default pressure level (intermediate vacuum). This measurement is made from an amplitude of a signal from the mass analyser 20. The pressure within the interface region of the mass spectrometer is increased whilst the signal is being generated. This may be controlled by the computer 60 or otherwise. This continues until the value of the signal indicating the ion beam intensity at the one or more ion masses has varied (reduced or increased) by the same or a similar predetermined level as that described with reference to the method of figure 2 or another intensity condition is met. This interface pressure is the new operating pressure. Following the adjustment of this pressure, the remaining instrument parameters are optimised for performance at the new pressure in step 235. At step 240 a mass spectrum is provided as an output from the mass analyser 20 at the operating pressure. Further mass spectra may be obtained from this or from similar samples without varying the pressure.

The sampler 50 separates atmospheric pressure (around 1000 mbar) from a lower pressure region (Psk set to 2.9 to 3.1 mbar (Ar), typically) in front of the skimmer 30 (an interface region). The pressure within the interface region may be controlled and operates at a vacuum with the vacuum level being adjustable and preferably computer controllable.

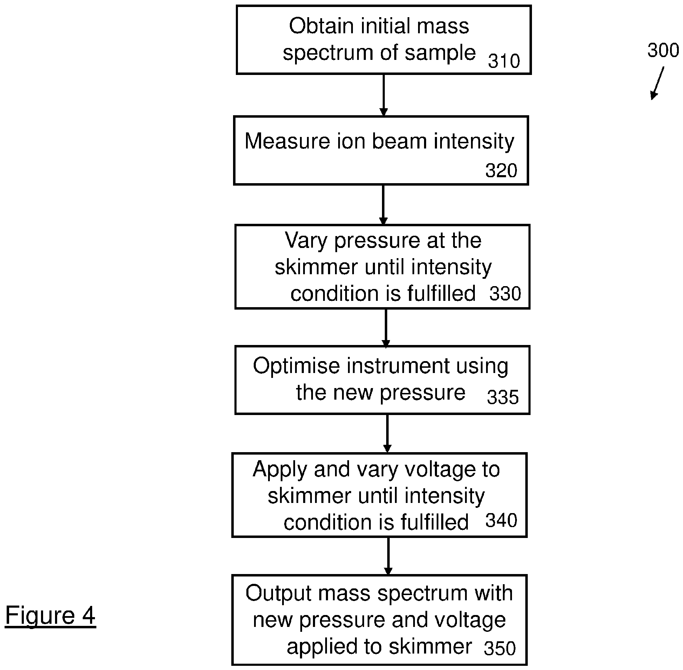

A combined method 300 is described with reference to figure 4. An initial mass spectrum is obtained at step 310. This is obtained with the pressure within the mass spectrometer (e.g., between the sample cone 50 and the skimmer 30) at a default pressure level (i.e., an intermediate vacuum of 3.1 mbar (Ar) or below).

Then, the ion beam intensity is measured at step 320, with the default pressure level (interface vacuum). This measurement is made from an amplitude of a signal from the mass analyser 20. The pressure within the mass spectrometer is increased whilst the signal is being generated. This continues until the value of the signal indicating the ion beam intensity at the one or more ion masses has reduced by a similar predetermined level as that described with reference to the method of figure 4 (step 330). This pressure is the operating pressure. Following the adjustment of this pressure, the remaining instrument parameters are optimized for performance at the new pressure in step 335, except for the skimmer potential that remains at ground.

Subsequently, at step 340, with the mass spectrometer operating and the ion beam generating a signal from the mass analyser 20, the voltage or electric potential applied to the skimmer 30 is varied using the control unit 40. The applied voltage is varied until a predefined change or amount of reduction is achieved. This determines the operating or operational voltage applied to the skimmer 30 (i.e., when the required change in value has been achieved).

At step 350 a mass spectrum is provided as an output from the mass analyser 20 at the operating pressure. Further mass spectra may be obtained from this or from similar samples without varying the pressure.

In figures 3 and 4, the steps "To optimise the instrument" include a procedure to search for instrument parameters (i.e., lens voltages) that maximize the ion transmission, starting with the first ion optical element (e.g., an electrostatic lens) behind the grounded skimmer and ending latest at the last ion optical element before the entrance of the analyser of the mass spectrometer.

The detailed conditions that define the maximization of ion transmission can vary from lens to lens and from iteration to iteration and can have additional side conditions. Two iterations of this process are common. The optimisation process can either be executed manually, or automatically by using an algorithm, which defines a computer-controlled "auto-tune" of the instrument, for example.

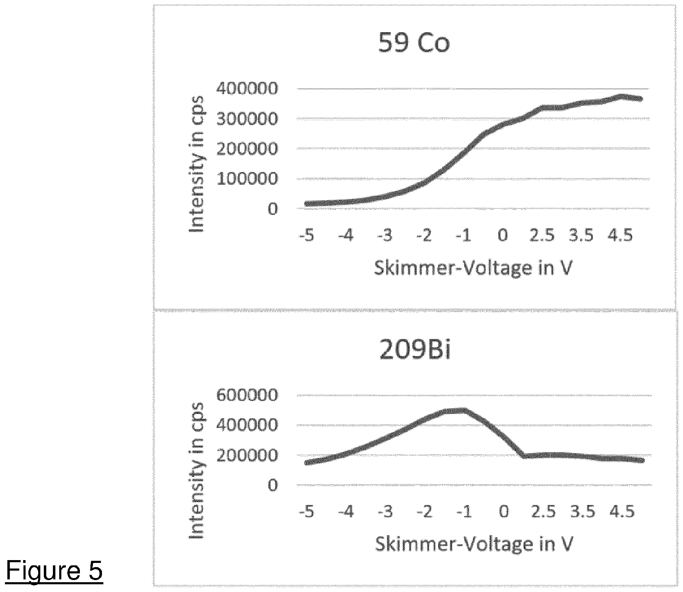

Figure 5 shows two graphical data sets for selected example ion masses. The y-axis provides ion beam intensity. The voltage applied to the skimmer 30 is provided on the x-axis. These data sets indicate a direct influence of the skimmer electric potential on the ion signal intensities in a calibration solution (no matrix). Furthermore, it can be seen from these plots that the optimal settings (i.e., of applied voltage) for the highest intensities differ with changing ion mass.

For example, the predetermined condition in the ion mass intensity signal may be to maximise this signal for a particular mass ion. The example ion, 59Co, requires a positive skimmer voltage (around 4.5 V) and example ion, 209Bi, requires a slightly negative voltage (between -1 V and -2 V). This indicates that there may not be an optimal skimmer potential that can provide an intensity gain for all analytes and sample types (at least to maximise sensitivity) and for all purposes. Since ions of higher mass may require a more negative voltage than lower mass ions, the required skimmer operating voltage ideally needs to be varied between analytes and sample types. This may be described as an adaptive and dynamic lens tuning process.

Matrix effects reduce ion signal intensity obtained from low concentration samples (e.g., 1 ppb). This reduction may be due to space charge effects within or after the skimmer 30. In this region of the system 10, whenever the Debye length is no longer small compared to skimmer dimensions, the charges are separated and electrons are lost. The space charge of the remaining positive ions, (i.e., Coulomb forces between ions) defocus or expel ions out of the ion beam. This effect may be enhanced if there are more ions (e.g., due to a higher matrix content), leading to higher suppression of the signal with increasing matrix content. If the skimmer has a small negative voltage applied to it, this effect may be reduced, avoided, or at least attenuated, as the electron loss is mitigated. However, it is also important to determine the correct or optimal applied potential to the skimmer 30 by varying the voltage and monitoring the signal until it reaches a proportion of the original value.

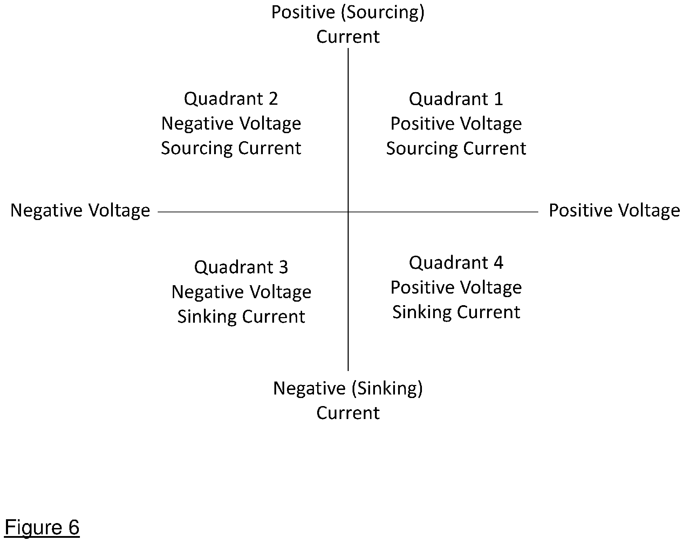

Figure 6 shows a chart of the operation of a four-quadrant power supply. Each quadrant either provides a positive or negative voltage and a sourcing current or a sinking current.

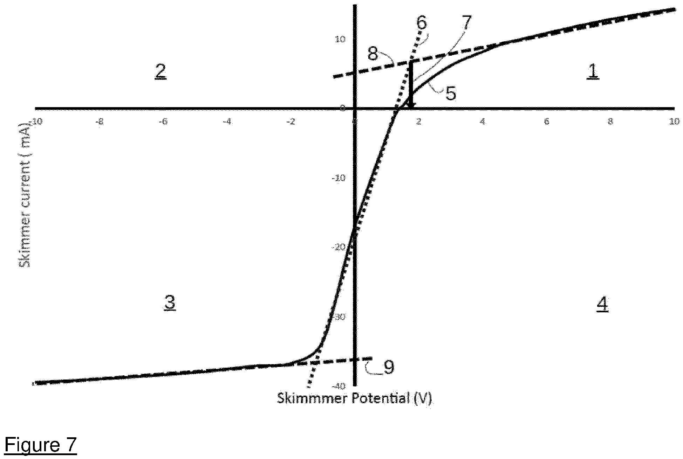

Figure 7 shows graphical results illustrating changes in ion intensities of mass spectra obtained from the system of figure 1, when samples contain different amounts of matrix components and different voltages are applied to the skimmer.

The plot of the graph in figure 7 is very similar to a traditional Langmuir plot. There are some differences, however, including that the skimmer is large on the scale of the plasma size compared to a Langmuir probe, and that the plasma is moving with ultrasonic speed towards the skimmer ("probe"). Nevertheless, several plasma parameters can be determined and this is illustrated by the data shown in the graph of figure 7.

In figure 7, the four quadrants of the I (current) versus U (voltage) plot are labelled 1 to 4. The measured relationship between U and I lies in three quadrants: 1, 4 and 3. Line 8 indicates the range where the electron current is dominant, while line 9 indicates the range where the sum of the ion current and the current of the photoelectrons leaving the skimmer predominates. In between, as indicated by the line 6, there is a transition range.

The voltage at which no net current is flowing is the floating potential. The voltage indicated by the arrow 7 is a good approximation of the plasma potential.

Alternatively or additionally, the electric potential applied to the skimmer 30 may be modified by applying a smaller AC voltage on top of the DC voltage (x-axis in figure 7). The measured current (y-axis in figure 7) provides a slope of the Langmuir curve and, in combination with the absolute current, indicates a position on the Langmuir curve.

In the results of figure 7 it can be seen that the curve 5 does not go through the origin of the coordinate system but crosses three of the four quadrants of the coordinate system. Therefore, in order to set the skimmer potential to any required value, then it should be driven by a four-quadrant or bipolar power supply. This power supply can operate both as source and as a sink. Therefore, the provision of a bipolar or four-quadrant power supply (as control unit 40) can provide additional advantages to the system 10. Quadrants 1, 3 and 4 (from figure 6 and 7) are used in the present system.

It can also be useful to provide the system with a means or switch to transfer operation of the system 10 between high sensitivity settings (achieving highest signals) and matrix robustness settings (achieving lower signals but better signal recoveries in matrix samples) modes. Therefore, the voltage and pressure (and other parameters) may be switched preferably during the same measurement or experiment. This configuration of mode-switching may be automated and controlled by computer 60 or a control unit.

Whilst the application of a DC voltage (and a negative voltage in particular) provides the described advantages of reducing matrix effects, this voltage enables additional improvements to the operation of the mass spectrometer. When the system 10 is operated with a positive voltage applied to the skimmer 30, the skimmer is kept cleaner or cleaned by a deflection effect induced by the voltage. This may be improved by the application of an AC current over the DC offset. Under normal operation of a mass spectrometer, it is the skimmer that requires cleaning more often than other components. This effort may be reduced with the improvements described here. This can be a particular advantage for nickel skimmers, where deposits can build up over time for high matrix samples.

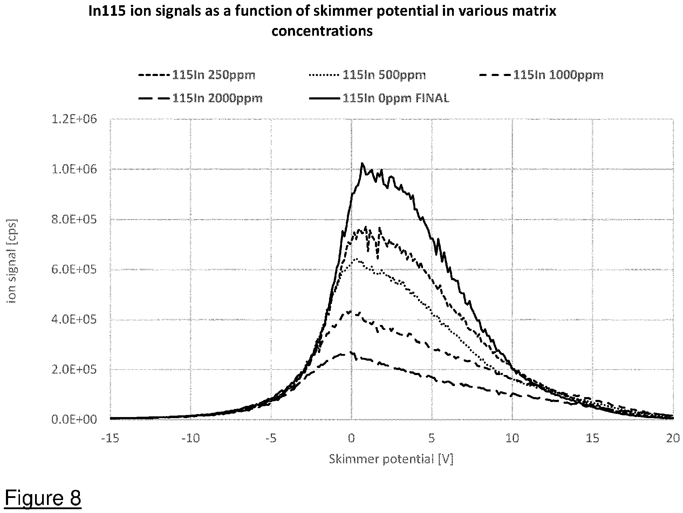

Other than for maximizing the signal for a specific analyte mass, the skimmer potential can be used to improve the response of the mass spectrometer signals on samples that contain high levels of matrix components. Figure 8 shows the dependency of the 115ln signal as a function of the skimmer potential firstly, and secondly, its dependence on the amount of matrix content in the sample. The matrix in this case consists of increasing concentrations of a mixture of Fe, Ni, Mg, Ca and other elements. The plot shows, that the 115ln analyte response is asymmetric with respect to ground potential on the skimmer. It also shows that the higher the matrix content, the more of the 115ln analyte signal is lost.

However, if a sufficiently negative skimmer potential is chosen, figure 8 indicates that the loss of 115 In analyte signal becomes less and less dependent on the amount of matrix content in the solution. When the skimmer potential is set to approximately -2.5 V, the 115ln analyte signal is unchanged up to a matrix content of 1000 ppm, but a matrix concentration of 2000 ppm will still lead to a notable signal loss. This residual signal loss can still be reduced when the skimmer potential is set to -4.0 V. In figure 8, the signal loss with respect to a sample containing no matrix is only 10% for a skimmer potential of -4.0 V, while it is about 25% for a skimmer potential of -2.5 V. At the same time, the measured 115ln signal intensity drops by about a factor of 2 when going from -2.5 V to -4.0 V.

As a summary, figure 8 shows that by means of setting a negative skimmer potential, two effects are observed.
1) a reduction in overall intensity
2) an improvement in signal recovery even for samples with high matrix content. Referring to the method that is outlined in figure 2, figure 8 indicates that using the condition of a signal decrease by a factor of 4 in the case of a grounded skimmer and using a clean sample, this will define to use a skimmer potential of -2.5 V. If this skimmer potential of -2.5 V is used to analyse samples with 2000 ppm matrix content, the signal recovery of the 115ln signal will be improved to 75% as compared to a recovery of 30% in the case of a grounded skimmer. The signal recovery can be further improved by using a higher factor of signal reduction about 6 or 7 as a condition in the method shown figure 2. This would define a skimmer potential of -4.0 V and further improve the signal recovery in a 2000 ppm matrix sample from 75% to 90%. Therefore, the quantitative results can be more accurate when applying an appropriate voltage to the skimmer 30. The optimal electric potential depends on various factors including:
   The element that is being measured.
   The matrix type and concentration in the sample.
   Plasma conditions.
   The condition of the skimmer cone that may change with use.
   The application or purpose of the results.

One way to find the optimum voltage is to vary the skimmer voltage until the signal from the ion mass of interest changes or reduces by a predetermined amount. The best value for the predetermined amount can be found from plots as such that shown in figure 8.

Additional information may be considered when determining an appropriate skimmer potential. They include:
1) measuring plasma related ions (Ar2, Ar, ArO, O2, etc.), and their relationships, interaction, quotients etc.
2) a measurement of the total (ion and electron) current that impacts an ion optical element, such as a lens, a dedicated electrode inserted into the beam path for this purpose, or the skimmer itself.

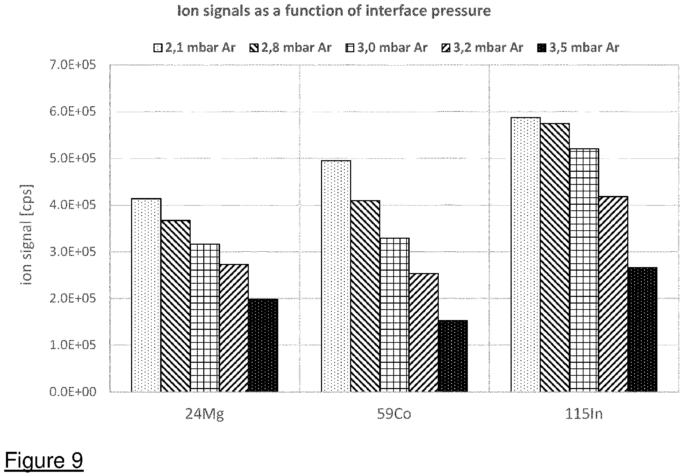

Figure 9 illustrates a second mechanism that can be used for improving signal recovery in matrix samples. The pressure in the plasma sampling interface between sample cone and skimmer cone has a strong impact on the ion transmission into the mass spectrometer. It can also be used to control the ion beam intensity that is entering the mass spectrometer. In figure 9, the ion signals of three different analytes are shown for five different interface pressures. When the interface pressure is increased, the signals are decreasing. According to the method that is outlined in figure 3, the interface pressure can be increased until the signal of e. g. one of the analytes in figure 9 is reduced by a predefined factor. In the case of 115ln, this factor could be 2, when pressures are restricted to that range given in figure 9. It could be higher when the pressure range is extended beyond these values.

The method of reducing the ion beam intensity via an increased interface pressure is more limited to smaller reduction factors than the method of using the skimmer potential. Both methods can be combined by first using the pressure increase and then the skimmer potential to achieve higher reduction factors and thereby better matrix recovery values. The advantage of using the combined method, as it is outlined in figure 4, is that the improved matrix recovery is more stable in the long-term behaviour.

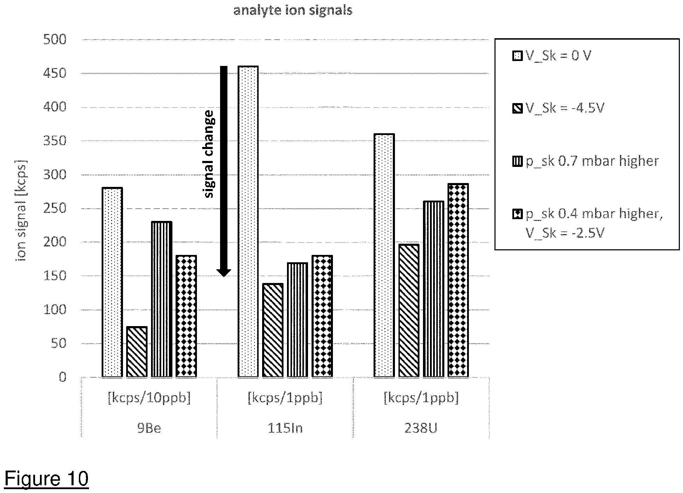

Figure 10 shows selected signals measured with a mass spectrometer that was set up according to prior art (a) Vsk ₌ 0 V) and as is described in figures 2 to 4; (b) Vsk ₌ -4.5 V; c) Psk 0.7 mbar (Ar) higher; d) Psk 0.4 mbar (Ar) higher and Vsk ₌ -2,5 V). For the prior art settings, the 115ln signal is about a factor of 3 higher than for the other three matrix improved settings. In this case, the data was acquired on a different system than that of figure 8, where the skimmer potential found for a predetermined signal reduction by a factor of 4 was already found for Vsk ₌ -2.5 V. This reflects the importance of an instrument-specific tuning guided by signal reduction factors, rather than by applying shifts of the skimmer potential to a fixed negative voltage.

Also illustrated in figure 10 is the specific difference between the method of figure 2 (Vsk ₌ -4.5 V) and that of figure 3 (Psk 0.7 mbar (Ar) higher). While the first one does also supress light analyte masses such as 9Be quite strongly compared to prior art, the second method leaves the intensity of the light ions nearly unchanged. Since light ions are generally underrepresented by the ICP-MS instrument mass bias, the use of increased interface pressures is beneficial for them. A similar benefit but to a lesser extent is seen for high mass ions such as 238U if increased interface pressures are used.

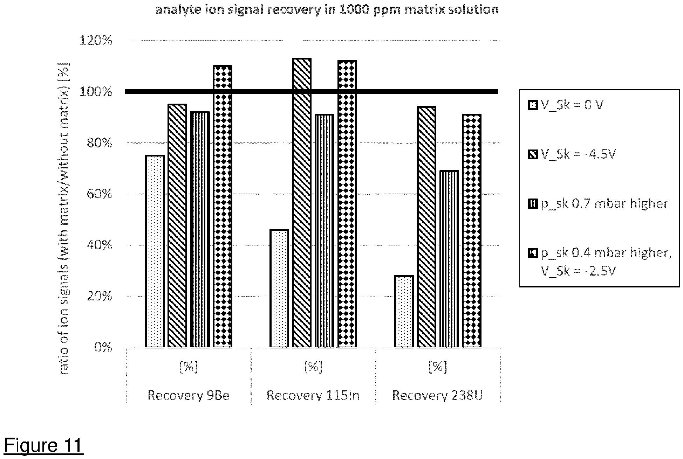

Figure 11 finally shows the results of using the four different instrument settings of Figure 9 in high matrix samples. The sample contains the same mixture of matrix components as was used in figure 8. The bar graphs show the recovery in % of the three ion signals that are shown in figure 10 in matrix solutions of 1000 ppm.

While the prior art settings only achieve below 80 %, 50% and 30% recovery, the settings found according to figures 2, 3 and 4 all perform better, typically depending on the specific analyte. The methods according to figure 2 and 4 both achieve recoveries between 80% and 120% for all shown analytes. In the case of 238U, the strong improvement in recovery from 30% to 90% goes along with only 20% loss in analyte signal intensity, when using the method according to figure 4.

Summing up the figures 8 to 11, a controlled reduction of beam intensity is beneficial for the analyte signal recoveries across the whole elemental mass range in high matrix samples. For the controlled reduction of beam intensity, a negative potential applied to the electrically isolated skimmer as well as an elevated interface pressure can be used. A predefined reduction in the analyte signal of a clean sample will simultaneously achieve an improvement in analyte recovery in high matrix samples. The controlled reduction of beam intensity has been evaluated to be substantially optimal in the range of those analyte masses that are major matrix constituents, such as for example Mg, Ca, Fe and Ni, having average ion masses of 24.31 u, 40.08 u, 55.85 u and 58.71 u, respectively,

Furthermore, when certain skimmer materials are used, especially those with low thermal conductivity, then the cone of the skimmer 30 can reach very high temperatures (e.g., 1000°C) - Tsk. Whilst a high tip temperature can help to avoid the build-up of deposits, oxidation may quickly lead to decomposition, which will degrade operation of the mass spectrometer. Applying an electric potential to the skimmer can also reduce the oxidation that is often caused by aggressive plasma conditions and provides an additional advantage, especially for skimmer materials such as titanium, nickel or aluminium.

Different values of the skimmer potential may be used for each (different) sample type. Optimum Skimmer Potential (for a certain sample type and a certain analyte) is when signal recovery stays as close to 100% as possible. Hence, the skimmer potential may be varied with and without the matrix present.

An optimal skimmer potential may also be dependent on the ion mass. Therefore, the ion mass of interest of a specific analyte may be used to determine the operational skimmer potential providing optimum sensitivity or/and robustness to matrix effects. In other words, the method 100 may use one or more ion mass intensity values in a particular range to determine the operational skimmer voltage.

Advantages include an increase of the analytical robustness of the instrument for high total dissolved solids (TDS) samples, a (possible) increase in sensitivity that can be regulated or set by skimmer potential, and that hardware changes may be avoided when switching between a high sensitivity mode and a high matrix mode. Furthermore, long term signal stability may be improved because of a reduction of coating or deposition.

The expansion chamber pressure between the sampler cone and the skimmer cone of the plasma interface is important for the overall beam intensity. Generally, lower pressure in this region allows more ions to enter the mass spectrometer, while higher pressures suppress ion intensities. The graph shown in Figure 9 shows that low-to-mid mass ions benefit most from low pressures, while higher pressures will mainly reduce all intensities. Results were obtained with the skimmer grounded. Transfer optics were optimised to the respective interface pressure.

In general, analyte signals drop with pressures of 3.5 mbar (Ar) and higher. This trend was used to reduce the total beam intensity entering the skimmer cone and may also occur downstream of the skimmer in the extraction region. The reduction may be by about a factor of two or more.

An instrument tuning scheme may be implemented. This can involve the following steps:
1. Attenuate the ion beam/space charge by increasing the interface pressure.
2. Optimisation of the voltages on the transfer optics to fit with the elevated interface pressures. The lens voltages after retuning are either:
   a. Static; or
   b. Mass-dependent (scanning).
   Optimum lens voltages show benefits and further improve analyte signal stability.
3. Set a negative skimmer potential to defocus a defined fraction of the beam intensity.

This further attenuates the beam intensity and improves the signal recovery in matrix-loaded samples, as described above. Negative potentials may need to be around half of what is required to change the ion intensity value by the predetermined amount compared to when the pressure is kept at the standard value (e.g., around 2.9 to 3.1 mbar (Ar) or below). Therefore, the voltage values (with an increase in pressure up to 4.3 mbar (Ar)) may be in the range of -0.5 V to -3 V.

It is preferred to follow this order of steps because an optimisation of the transfer optics after the skimmer potential has been set to a negative voltage may deteriorate matrix suppression.

Improvements in long-term stability and matrix suppression are also achievable. Improvements in matrix suppression remain comparable to when using a negative skimmer potential only. In addition, the long-term stability of signals in matrix-loaded samples may be improved by increasing pressure within the interface and the extraction region, compared to when a skimmer potential is applied without the use of higher pressure. Signal drift over time is reduced with increased interface pressure. Stability in this example is highest at an elevated interface pressures of 3.8mbar (Ar) and a negative skimmer potential of -2.2 V. Better long-term stability may reduce the requirement for an active control of parameters during the measurement.

Low-mass sensitivity is also considered. When using an elevated interface pressures in conjunction with negative skimmer potentials, the sensitivities for low-mass ions may be a factor of two higher than when running at standard interface or normal pressures (~ 3.0 mbar (Ar)). Current mass spectrometers may attempt to compensate for matrix effects using different modes of operation.

A determination of optimal parameters may be made. This finds an improved or optimal combination of interface pressure and skimmer potential values. Both may strongly depend on the size, state and condition of the individual skimmer and sample cones. Their important parameters are:
1. Sample cone orifice size (nominal)
2. Sample cone coverage (matrix deposits)
3. Skimmer cone orifice size (nominal)
4. Skimmer coverage (matrix deposits)
5. Skimmer geometry
6. Torch position (sampling depth)
7. Cone temperatures
8. Cone materials

For setting up the improved matrix mode (by selection of the interface pressure and the skimmer potential) a "tuning-in-matrix" approach, may not be used as unknown samples may contain unknown quantities of matrix. This would also require at least two standards for tuning instead of one.

If complete tuning is to be done by using one clean sample only, then a two-step approach can be used. The first step prepares the initial tuned set of parameters. The second step is to actively stabilize the signals throughout the analysis. This may be an optional feature of the tuning strategy.

A description of the first step follows. Initial tuning of parameters is carried out before an analytical measurement is made.

First step:
1. At a defined voltage on the skimmer (e.g., zero or a positive value), increase interface pressure while monitoring standard analyte intensities.
2. Record the pressure measurement (e.g., using a pressure sensor), when one or more of the analyte intensities (ion masses) change by:
   a. less than 70 % (or 60%, 50%, 40%, 30%) AND
   b. more than 65% (or 55%, 45%, 35%, 25%)
3. Optimise instrument sensitivity (lens voltages of the transfer optics)
   a. Save optimised static voltages
   b. Save mass-dependent voltage corrections (if applicable)
4. Lower the Skimmer potential
5. Keep and save the skimmer potential (operational electric potential), where one or more analyte intensities have
   a. less than 70 % (or 60%, 50%, 40%, 30%) AND
   b. more than 65% (or 55%, 45%, 35%, 25%) of the intensity observed after 3.

The total attenuation or change of the monitored standard analytes (ratio of sensitivity after and before executing the above tuning procedure) may be in the range of 6% to 50%.

Second step: Continuous monitoring and control of the voltages and/or pressure during the analytical measurement.

Since the cone conditions may change throughout the analysis time due to the high matrix content, one or more parameters may be measured and kept constant via a feedback loop.

These parameters can be the following:
1. interface pressure
2. other system pressures or gas flows
3. a plasma-related ion signal, such as f. ex. 38Ar+, or a molecular ion, such as 40Ar40Ar+ or others
4. an ion current (or an electron or total current) is measured at the skimmer or at another electrode downstream of the skimmer 30. This may be an ion optical component, such as a lens or aperture. The component may be as close as 0.5 mm behind the skimmer or as close as 0.5 mm before a first RF multipole of the system or somewhere in between.
5. an ion signal of an internal standard that is added to the matrix sample.

The feedback loop may be configured to monitor and control one or several of these parameters and keep variations within a narrow band around the initial value.

This is done by controlling a related second system parameter, such as the fore pump speed in case of controlling the interface pressure. The feedback loop may also control any other of the initially tuned parameters, such as the skimmer potential or any of the transfer optics lens potentials to keep the monitored system parameter at a constant value.

As will be appreciated by the skilled person, details of the above embodiment may be varied without departing from the scope of the present invention, as defined by the appended claims.

For example, different voltages may be applied to skimmer. Different mass spectrometer types may be used. Although deriving the ion beam intensity from the intensity (amplitude) of the peaks in the mass spectrum is preferred, there are other options, such as measuring a total ion current using an ion optic lens. A mass spectrum may consist of a single mass only. Matrix components may include nickel and sea water components. Other samples of interest may include wastewater, exploratory geological samples (desolvated minerals), and laser-ablated solid surfaces (e.g., minerals and glasses). Whilst cone skimmers are shown and described, flat skimmers (simple a disk with a hole in it) or skimmers with a flattened cone may also be used but performance may suffer with flatter skimmers. The predetermined change in ion beam intensity (e.g., as indicated by the ion mass signal or amplitude) may be determined each time and at the beginning of the method. For example, different conditions, parameters, samples, sample types, and matrix type may affect the value of the predetermined amount.

When repeating the method using different samples having known varying compositions and recording the required electrical potential for each known composition, this information is used to find optimal settings for the mass spectrometer. This may create a lookup table to be consulted with new samples having known (similar) matrix compositions. However, the parameters of a similar composition may also be used.

Where ion species are stated, these may also be referred to as ion masses. Where ion masses are stated, these may also be referred to as ion species.

The value indicating the ion beam intensity of the one or more ion species changes by a predetermined amount may also be described as the value indicating the ion beam intensity of the one or more ion species fulfils a predetermined condition where the value at a particular level is one example of this.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method for operating a mass spectrometer having a skimmer and a circuit configured to apply an electric potential to the skimmer, the method comprising the steps of:
obtaining an initial mass spectrum of a sample;
measuring a value of the obtained initial mass spectrum, the value indicating an ion beam intensity of one or more ion species;
applying a varying DC electric potential to the skimmer to identify an operational electric potential, wherein the DC electric potential is varied until the value indicating the ion beam intensity of the one or more ion species changes by a predetermined amount; and
providing an output comprising the mass spectrum with the operational electric potential applied to the skimmer.

2. The method of claim 1, wherein the step of obtaining the initial mass spectrum of the sample is carried out with no electric potential or a ground potential applied to the skimmer.

3. The method of claim 1 or claim 2, further comprising the step of increasing or decreasing a pressure at an interface between a sampling aperture and the skimmer to vary the value indicating the ion beam intensity at the one or more ion species so that the combination of the increased or decreased pressure and electric potential provide the value indicating the ion beam intensity of the one or more ion species at the predetermined amount.

4. The method according to any previous claim, wherein the value indicating the ion beam intensity is any one or more of: an amplitude of one or more peaks in the mass spectrum, and a measurement of a total current.

5. The method according to any previous claim, wherein the predetermined amount is a percentage or fractional change in the value.

6. The method of claim 5, wherein the predetermined amount is a reduction in the value.

7. The method of claim 6, wherein the reduction is between a factor of 3 and ten times.

8. The method according to any previous claim, further comprising repeating the method steps using different samples having known compositions and recording the required electric potential to change the value indicating an ion beam intensity for each known composition by the predetermined amount.

9. The method according to any previous claim, further comprising providing a further output comprising a mass spectrum with the operational electric potential applied to the skimmer.

10. The method according to any previous claim, wherein the electric potential is a negative electric potential.

11. The method of claim 10, wherein the electric potential is between -1V and -4V.

12. The method according to any previous claim further comprising the steps of:
storing the electric potential required to change the value indicating the ion beam intensity of the one or more ion species to the predetermined amount for different sample types and compositions.

13. The method according to any previous claim further comprising the step of applying an AC current to the skimmer at the same time as applying the DC electric potential.

14. The method according to any previous claim further comprising the steps of:
removing the applied electric potential; and
providing a further output comprising a mass spectrum without the electric potential applied to the skimmer.

15. A method for operating a mass spectrometer, the method comprising the steps of:
obtaining an initial mass spectrum of a sample;
measuring a value of the obtained initial mass spectrum, the value indicating an ion beam intensity of one or more ion species;
varying a pressure within the mass spectrometer to identify an operational pressure, wherein the pressure is varied until the value indicating the ion beam intensity of the one or more ion species changes by a predetermined amount; and
providing an output comprising the mass spectrum with the pressure within the mass spectrometer at the operational pressure.

16. The method of claim 15 further comprising the step of applying a varying DC electric potential to a skimmer of the mass spectrometer to identify an operational electric potential, wherein the DC electric potential is varied so that the combination of applying the operational pressure and the electric potential to the skimmer change the value indicating the ion beam intensity of the at least one or more ion species by the predetermined amount.

17. The method of claim 16, wherein the operational electric potential is a negative electric potential.

18. The method according to any of claims 15 to 17, wherein the predetermined amount is a reduction in the value indicating the ion beam intensity of the one or more ion species.

19. The method according to any of claims 15 to 18, wherein the pressure is increased.

20. The method according to any of claims 15 to 19, wherein the pressure is the pressure at an interface between a sampling aperture of the mass spectrometer and the skimmer.

21. A mass spectrometer having a skimmer and means adapted to execute the steps of any previous claim.

22. The mass spectrometer of claim 21, wherein the mass spectrometer is an inductively coupled plasma mass spectrometer, ICP-MS.

23. The mass spectrometer of claims 21 and 22 further comprising a bipolar power supply configured to apply the electric potential to the skimmer.

24. The mass spectrometer according to any of claim 21 to 23, wherein the skimmer is formed from platinum, aluminium, titanium, or nickel or any combination of these.

25. The mass spectrometer according to any of claim 21 to 24 further comprising a heater configured to maintain the skimmer at a temperature between 200°C and 750°C and preferably between 450°C and 650°C.
